# EUROPÄISCHE PATENTSCHRIFT

(11) **EP 1 177 969 B1**
(45) Veröffentlichungstag und Bekanntmachung des Hinweises auf die Patenterteilung: **22.09.2004**
(21) Anmeldenummer: 01118090.8
(22) Anmeldetag: 26.07.2001
(51) Int. Cl.: B62D 25/02, B60J 1/08

(54) **Rohbaukarosserie für ein Kraftfahrzeug**
Body-in-white structure for a vehicle
Structure brute de carrosserie pour véhicule

(30) Priorität: 01.08.2000 DE 10037392
(43) Veröffentlichungstag der Anmeldung: 06.02.2002
(73) Patentinhaber: DaimlerChrysler AG, 70567 Stuttgart (DE)
(72) Erfinder: Gauss, Joachim, 71063 Sindelfingen (DE); Lapschies, Carsten, 71101 Schönaich (DE); Rapp, Helmut, 73095 Albershausen (DE)

(56) Entgegenhaltungen:
- DE-A- 3 414 394
- DE-A- 4 415 879
- FR-A- 1 122 611
- FR-A- 2 264 703

## Beschreibung

Die Erfindung betrifft eine Rohbaukarosserie für ein Kraftfahrzeug mit mehrschaligen Karosseriewandabschnitten, die oberhalb einer Fahrzeuggürtellinie wenigstens im Bereich von einer Schale mit jeweils wenigstens einem Karosserieausschnitt versehen sind.

Eine solche Rohbaukarosserie ist bei Großraumfahrzeugen (Mercedes-Benz V-Klasse), die auch als Transporter bezeichnet werden, allgemein bekannt. Die Rohbaukarosserie weist Seitenwandabschnitte auf, die zwei- oder dreischalig aufgebaut sind. Auf Höhe der umlaufenden Fahrzeugverglasung weisen die Seitenwandabschnitte insbesondere im Bereich hinter den Vordertüren und oberhalb der vorderen und hinteren Radhäuser Karosserieausschnitte auf, die einen gemeinsamen Fensterausschnitt bilden. Hier können nun je nach Ausführung des Fahrzeugs geeignete Verglasungen vorgesehen werden, die insbesondere durch eine Festverglasung, durch schwenkbewegliche Ausstellscheiben oder durch Schiebefenster gebildet sein können. Bei Kastenwagen ist es auch möglich, keine Fensterausschnitte vorzusehen und somit wenigstens eine der beiden Schalen jedes Seitenwandabschnittes geschlossen zu gestalten. Für jede dieser Varianten, insbesondere für die verschiedenen Verglasungsvarianten, ist beim Stand der Technik bislang häufig ein unterschiedlicher Verglasungsanschluss vorgesehen oder die Scheiben stehen nach außen über. Weitere Varianten ergeben sich durch unterschiedliche Arten von Innenverkleidungen, die entweder direkt mit dem Fensterausschnitt abschließen oder aber in Abstand zu dem Fensterausschnitt mit der Innenschale jedes Seitenwandabschnittes verbunden sind. Eine weitere Variante ergibt sich, falls gar keine Innenverkleidung im Bereich der Seitenwandabschnitte vorgesehen ist.

Die deutsche Offenlegungsschrift DE 44 15 879 A1 offenbart eine im Bereich des Dachs dreischalige Rohbaukarosserie. Im oberen Bereich eines Türausschnitts sind die beiden äußeren Schalen zusammengeführt und mittels eines Verbindungsblechs mit der inneren Schale verbunden. Das Verbindungsblech und die innere Schale bilden zusammen einen Aufnahmekanal, in dem ein Dichtungselement fixiert ist. Das Dichtungselement ist flächig mit einem inneren Randsteg des Aufnahmekanals verbunden.

Aufgabe der Erfindung ist es, eine Rohbaukarosserie der eingangs genannten Art zu schaffen, die mit einfachen Mitteln Anpassungen an unterschiedliche Varianten von Karosseriewandabschnitten, d.h. an unterschiedliche Fahrzeugausführungen, ermöglicht.

Diese Aufgabe wird dadurch gelöst, dass im Bereich des Karosserieausschnittes eine umlaufende Aufnahmekanalanordnung vorgesehen ist, deren eine Kanalwandung durch eine innere Schale und deren andere Kanalwandung durch eine äußere Schale jedes Seitenwandabschnittes gebildet sind, und dass für eine Verglasung und/oder eine Innenverkleidung ein umlaufendes Anschlussprofil vorgesehen ist, das mittels eines Steckabschnitts in der Aufnahmekanalanordnung fixierbar ist.

Die Aufnahmekanalanordnung kann einen durchgehend gleichbleibenden Querschnitt oder auch einen sich vorzugsweise alternierend ändernden Querschnitt aufweisen. Sie kann aus mehreren Kanalabschnitten zusammengesetzt oder aus einer durchgängigen Kanalerstreckung gebildet sein. Die Aufnahmekanalanordnung bietet eine einheitliche Steckaufnahme für ein entsprechendes Anschlussprofil einer Verglasung und/oder einer Innenverkleidung. Falls das Kraftfahrzeug als Kastenfahrzeug ausgeführt ist und ohne einen Fensterausschnitt mit geschlossener Außen- oder Innenschale ausgeführt ist, dient die Aufnahmekanalanordnung für die Aufnahme von Klebstoff, insbesondere in Raupenform, um eine sichere flächige Verbindung zwischen Innen- und Außenschale zu ermöglichen. Unter dem Begriff der Gürtellinie wird eine umlaufende, horizontale Fahrzeuglinie verstanden, die sich unterhalb der Verglasung, vorzugsweise auf Höhe von Türgriffanordnungen, befindet. Die Fahrzeuggürtellinie befindet sich somit in dem Bereich zwischen der Unterkante der Scheibenausschnitte und der Oberkante der Kotflügelaussparungen. Durch die erfindungsgemäße Lösung ist eine einfache Anpassung an unterschiedliche Varianten einer Rohbaukarosserie möglich, wobei in vorteilhafter Weise rohbauseitig keine größeren individuellen Anpassungen vorgenommen werden müssen. Die gleiche Rohbaukarosserie kann somit insbesondere für ein Fahrzeug mit Festverglasung, für ein Fahrzeug mit schwenkbeweglichen Ausstellscheiben, für ein Fahrzeug mit Schiebefenstern oder für ein im hinteren Bereich der Seitenwandabschnitte fensterloses Fahrzeug eingesetzt werden. Als Verglasung können sowohl Kunststoff- als auch Glasscheiben vorgesehen sein. Das Anschlussprofil ermöglicht einen modularen Verglasungsanschluss je nach Gestaltung der jeweiligen Verglasung. Das Anschlussprofil kann je nach Verglasungsvariante unterschiedlich gestaltet sein. Bei allen Varianten ist jedoch immer der gemäß der Ausgestaltung beschriebene Steckabschnitt vorgesehen, so dass eine einheitliche Befestigung des Anschlussprofils gewährleistet ist.

In Ausgestaltung der Erfindung weisen beide Schalen jeweils einen Karosserieausschnitt unter Bildung eines gemeinsamen Fensterausschnittes auf, und die Kanalwandungen sind durch Randstege beider Karosserieausschnitte gebildet, die parallel zueinander und zur Fensterebene ausgerichtet sind. Die Aufnahmekanalanordnung ist somit zur Mitte des Fensterausschnittes hin offen und weist vorzugsweise ein U-förmiges Querschnittsprofil auf.

In weiterer Ausgestaltung der Erfindung liegen die beiden Schalen auf der dem Karosserieausschnitt abliegenden Seite der Aufnahmekanalanordnung unter Bildung eines umlaufenden Verbindungsflansches flächig aneinander und sind fest miteinander verbunden, insbesondere miteinander verschweißt oder verklebt. Hierdurch wird für den Bereich des wenigstens einen Karosserieausschnittes eine relativ hohe Steifigkeit erzielt, die auch die Steifigkeit des Seitenwandabschnittes und der gesamten Rohbaukarosserie vergrößert.

In weiterer Ausgestaltung der Erfindung weist das Anschlussprofil wenigstens eine Stütznut für die Abstützung auf einem Randsteg eines Karosserieausschnittes auf. Auch die wenigstens eine Stütznut ist wie der Steckabschnitt obligatorisch, um die Befestigung des Anschlussprofils unabhängig von der jeweils gewählten Variante zu sichern.

In weiterer Ausgestaltung der Erfindung weist das Anschlussprofil eine Auflagefläche für die Positionierung einer Innenverkleidung auf. Vorzugsweise ist die Auflagefläche als Hohlkehle oder als Hohlprofil gestaltet, in die ein entsprechender Randbereich der Innenverkleidung einbettbar ist.

In weiterer Ausgestaltung der Erfindung ist das Anschlussprofil mit einem Toleranzausgleichsabschnitt als Anschluss an die Innenverkleidung versehen. Dadurch ist der Randbereich der Innenverkleidung unabhängig von Innenverkleidungstoleranzen überdeckbar. Vorzugsweise ist der Toleranzausgleichsabschnitt als Abdecklippe oder auch als druckloses, flexibles Hohlprofil gestaltet.

In weiterer Ausgestaltung der Erfindung ist das Anschlussprofil mit wenigstens einem zu einer Verglasung gerichteten Stützabschnitt mit Abstandshalterfunktion versehen. Diese Ausgestaltung ermöglicht spezielle Anschluss- und Stützgeometrien, um die Verglasung auf Abstand zur Rohbaukarosserie zu halten.

In weiterer Ausgestaltung der Erfindung weist das Anschlussprofil einen zu einer Verglasung gerichteten Dichtabschnitt auf. Diese Ausgestaltung ist für ein Ausstellfenster besonders geeignet, da das Ausstellfenster in geschlossenem Zustand unter Komprimierung des Dichtabschnittes gegen das Dichtprofil pressbar ist.

Unter dem mit dem Ausschnitt versehenen Karosseriewandabschnitt wird dabei nicht nur der Wandabschnitt eines unbeweglichen Karosserieteils, wie einer Seitenwand oder Rückwand, sondern auch ein Karosseriewandabschnitt eines beweglichen Karosserieteiles, wie z. B. einer Schiebetür oder dgl., verstanden.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt einen Ausschnitt einer in Fahrtrichtung rechten Seitenwand einer Ausführungsform einer erfindungsgemäßen Rohbaukarosserie,
- Fig. 2: eine vergrößerte Schnittdarstellung längs der Schnittlinie II-II des Ausschnittes nach Fig. 1 mit einer Festverglasung,
- Fig. 3: eine Schnittdarstellung ähnlich Fig. 2 mit einem Ausstellfenster, und
- Fig. 4: eine Schnittdarstellung ähnlich den Fig. 2 und 3 mit einer Schiebefensteranordnung.

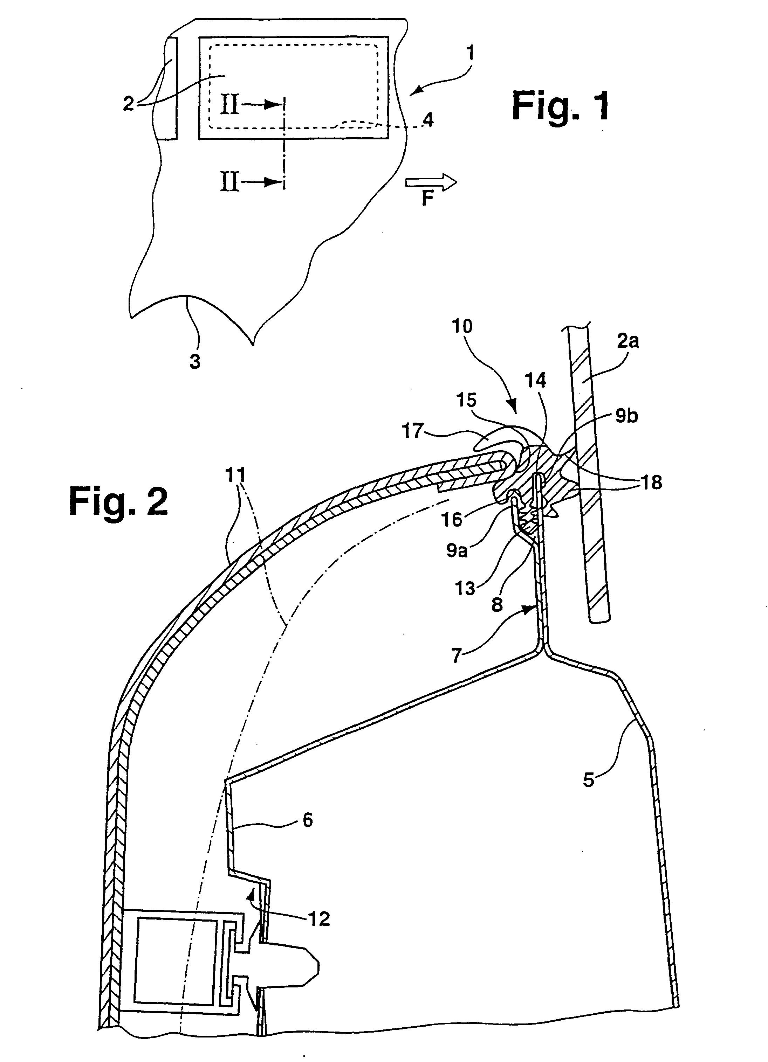

Ein Kraftfahrzeug nach Fig. 1 ist lediglich ausschnittsweise in einer Seitenansicht dargestellt. Das Kraftfahrzeug stellt eine Großraumlimousine nach Art eines Transporters oder Vans dar, kann jedoch auch als Kombi oder Kastenwagen in PKW-Größe gestaltet sein. Gezeigt ist ein Seitenwandabschnitt 1 etwa auf Höhe eines hinteren Radhauses 3, wobei durch den Pfeil F die normale Fahrtrichtung des Kraftfahrzeugs deutlich gemacht werden soll. Der Seitenwandabschnitt 1 weist einen viereckigen Fensterausschnitt 4 auf, der durch eine Verglasung 2 verschlossen ist. Zum Fahrzeugheck hin ist zudem ein weiteres, kleines Seitenfenster 2 vorgesehen, dessen Gestaltung grundsätzlich denen der nachfolgend beschriebenen Varianten zu dem in Fig. 1 vollständig dargestellten Fensterausschnitt 4 und der zugehörigen Verglasung 2 entspricht.

Der Seitenwandabschnitt 1 ist Teil einer Laderaumschiebetür der Rohbaukarosserie des Kraftfahrzeugs und ist, wie anhand der Fig. 2 bis 4 erkennbar ist, zweischalig aufgebaut. Eine Außenschale 5 und eine Innenschale 6 sind derart zusammengefügt, dass sie ein Hohlprofil für den Seitenwandabschnitt 1 ergeben. In geringem Abstand um den Fensterausschnitt 4 herum sind die Außenschale 5 und die Innenschale 6 unter Bildung eines umlaufenden Verbindungsflansches 7 über eine bestimmte Höhe flächig zusammengefügt und in diesem Bereich miteinander verschweißt oder verklebt. Die Innenschale 6 ist zudem im Bereich des zum Fensterausschnitt 4 ragenden Randsteges 9a derart abgewinkelt, dass sich zwischen einem Randsteg 9b der Außenschale 5 und dem Randsteg 9a ein Aufnahmekanal 8 mit etwa U-artigem Querschnitt ergibt. Der Aufnahmekanal 8 ist zur Mitte des Fensterausschnittes 4 hin offen. Sowohl der umlaufende Randsteg 9a als auch der umlaufende Randsteg 9b bilden somit jeweils einen Karosserieausschnitt, die gemeinsam den Fensterausschnitt 4 definieren.

Bei einem nicht dargestellten Ausführungsbeispiel der Erfindung bildet lediglich ein Randsteg 9a oder 9b einen entsprechenden Karosserieausschnitt, wohingegen die entsprechend andere Schale über diesen Karosserieausschnitt geschlossen gestaltet ist. Auch bei einer solchen geschlossenen Ausführung, die kein Fenster vorsieht, ist jedoch der Aufnahmekanal 8 in entsprechender Weise durch den Randsteg der einen Schale sowie durch die andere Schale gebildet. Der Aufnahmekanal dient bei diesem Ausführungsbeispiel für die Aufnahme von Klebstoff, vorzugsweise in Form einer umlaufenden Klebstoffraupe.

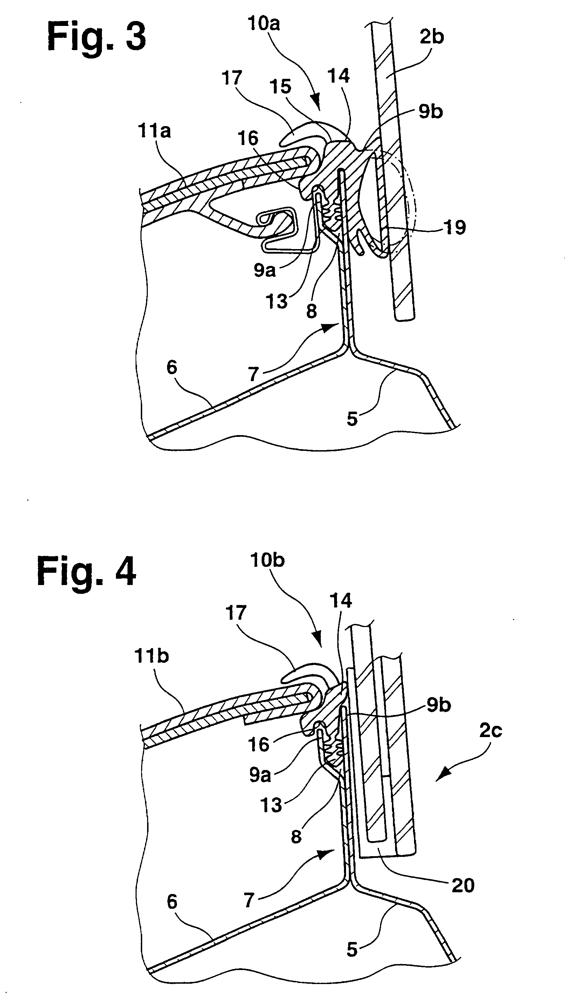

Um im Bereich des Fensterausschnittes 4 zum einen eine Verglasung 2a, 2b, 2c und zum anderen eine Innenverkleidung 11, 11a, 11b anschließen zu können, ist ein Anschlussprofil 10, 10a, 10b (Fig. 2 bis 4) vorgesehen. Dabei stellen die Fig. 2 bis 4 unterschiedliche Varianten von Verglasungen dar. Die Fig. 2 offenbart eine Variante mit einer Festverglasung 2a, Fig. 3 eine weitere Variante mit einem beweglichen Ausstellfenster 2b und Fig. 4 eine Variante mit einer Schiebefensteranordnung 2c. Die jeweiligen Anschlussprofile 10a bis 10c sind unterschiedlich gestaltet und weisen jeweils einige Grundkomponenten auf, die bei allen drei Varianten identisch vorgesehen sind. Dies ist zum einen ein Steckabschnitt 8, der auf den Aufnahmekanal 8 abgestimmt ist und ein kraftschlüssiges Einstecken des Anschlussprofils 10, 10a, 10b in den Aufnahmekanal 8 ermöglicht. Auch das Anschlussprofil 10a ist wie der Aufnahmekanal 8 umlaufend im Bereich des Fensterabschnittes 4 gestaltet.

Alle drei Varianten weisen zudem eine Auflagefläche 15 für die Innenverkleidung 11, 11a, 11b auf, wobei ein entsprechender Randabschnitt der Innenverkleidung 11, 11a, 11b in die als Hohlkehle gestaltete Auflagefläche 15 des Anschlussprofils 10, 10a, 10b eingebettet ist. Alle Anschlussprofile 10, 10a, 10b weisen zudem eine als Toleranzausgleichsabschnitt dienende elastische Abdecklippe 17 auf, die die Oberseite des Randabschnittes der jeweiligen Innenverkleidung 11, 11a, 11b überdeckt. Das gesamte Anschlussprofil 10, 10a, 10b ist vorzugsweise jeweils einstückig aus einem Kunststoff gestaltet. Als geeigneter Kunststoff ist vorzugsweise ein Elastomer vorgesehen.

Der Randsteg 9b der Außenschale 5 ist bei allen drei Varianten länger gestaltet als der Randsteg 9a, um gegebenenfalls einen zusätzlichen Plasmabeschnitt während der Herstellung der Rohbaukarosserie zu ermöglichen. Außerdem dient der länger gestaltete Randsteg 9b dazu, für das jeweilige Anschlussprofil 10, 10a, 10b eine klar definierte Stützauflage zu erzielen. Hierzu ist das Anschlussprofil 10, 10a, 10b mit einer Stütznut 14 versehen, in die der Randsteg 9b beim Einstecken des Steckabschnittes 13 einschiebbar ist. Auch für den kürzeren Randsteg 9a weist das Anschlussprofil 10a eine breiter und weniger tief gestaltete Aufnahmenut 16 auf, wobei im aufgesteckten Zustand des Anschlussprofils 10, 10a, 10b keine Berührung zwischen der Aufnahmenut 16 und dem Randsteg 9a im Bereich des Bodens der Aufnahmenut bzw. im Bereich des Stirnrandes des Randsteges 9a erzielt wird.

Je nach Ausführungsform weisen die drei Anschlussprofile 10, 10a, 10b gemäß den Fig. 2 bis 4 zudem noch weitere Bestandteile auf, die nachfolgend beschrieben werden. So ist das Anschlussprofil 10 gemäß Fig. 2 mit einem nach außen ragenden Stützabschnitt 18 versehen, der mehrere Stützhöcker aufweist, die sich als Abstandshalter an der Festverglasung 2a abstützen. Außerhalb dieses Stützabschnittes 18, d.h. gemäß Fig. 2 unterhalb der Stützhöcker, ist im Bereich des Verbindungsflansches 7 zudem eine Verklebung zwischen dem Rand der Festverglasung 2a und dem Verbindungsflansch 5 vorgesehen, die nicht näher dargestellt ist.

Beim Ausführungsbeispiel nach Fig. 3 weist das Anschlussprofil 10a einen nach außen ragenden Dichtabschnitt 19 auf, der in Fig. 3 in seiner unbelasteten Ausgangsstellung dargestellt ist, jedoch bei geschlossenem Ausstellfenster 2b in grundsätzlich bekannter Weise komprimiert ist. Beim Ausführungsbeispiel nach Fig. 4 ist das Anschlussprofil 10b an einer außerhalb des Verbindungsflansches 7 positionierten Fensterführung 20 abgestützt, die eine Verschiebung des inneren Fensterteiles ermöglicht. Der äußere Fensterteil ist fest mit der Fensterführung 20 verklebt. Die Fensterführung 20 selbst ist mit der Außenseite des Verbindungsflansches 5 in nicht näher dargestellter Wiese verklebt.

Wie anhand der Fig. 2 erkennbar ist, stützt sich die Innenverkleidung 11, 11a, 11b derart an dem jeweiligen Anschlussprofil 10, 10a, 10b ab, dass bei einer Aufprallbelastung auf die Innenverkleidung 11 durch ein entsprechendes Körperteil eines Fahrzeuginsassen ein Ausweichen der Innenverkleidung 11 bis in die gestrichelte Darstellung ermöglicht ist, in der die Innenverkleidung 11 an der stabilen Blech-Außenschale 6 anliegt. In Fig. 2 ist zudem erkennbar, dass die Innenschale 6 in ihrem vertikalen Bereich mit einem Einzug 12 versehen ist. Falls keine Vollverkleidung der Innenschale 6, sondern lediglich eine Teilverkleidung vorgesehen ist, so ist es möglich, die Teilverkleidung in diese eingezogene Vertiefung einzubetten.

## Patentansprüche

1. Rohbaukarosserie für ein Kraftfahrzeug mit mehrschaligen Karosseriewandabschnitten, die oberhalb einer Fahrzeuggürtellinie wenigstens im Bereich einer Schale mit jeweils wenigstens einem Karosserieausschnitt versehen sind,
**dadurch gekennzeichnet,**
**dass** im Bereich des Karosserieausschnittes (4) eine umlaufende Aufnahmekanalanordnung (8) vorgesehen ist, deren eine Kanalwandung (9a) durch eine innere Schale (6) und deren andere kanalwandung (9b) durch eine äußere Schale jedes Seitenwandabschnittes (1) gebildet sind, und dass für eine Verglasung (2, 2a, 2b, 2c) und/oder eine Innenverkleidung (11, 11a, 11b) ein umlaufendes Anschlussprofil (10, 10a, 10b) vorgesehen ist, das mittels eines Steckabschnittes (13) in der Aufnahmekanalanordnung (8) fixierbar ist.

2. Rohbaukarosserie nach Anspruch 1,
**dadurch gekennzeichnet,**
**dass** beide Schalen (5, 6) jeweils einen Karosserieausschnitt unter Bildung eines gemeinsamen Fensterausschnittes (4) aufweisen, und dass die Kanalwandungen durch Randstege (9a, 9b) beider Karosserieausschnitte gebildet sind, die parallel zueinander und zur Fensterebene hin ausgerichtet sind.

3. Rohbaukarosserie nach Anspruch 1,
**dadurch gekennzeichnet,**
**dass** die beiden Schalen (5, 6) auf der dem Karosserieausschnitt abliegenden Seite der Aufnahmekanalanordnung (8) unter Bildung eines umlaufenden Verbindungsflansches (7) flächig aneinanderliegen und fest miteinander verbunden, insbesondere verschweißt oder verklebt sind.

4. Rohbaukarosserie nach Anspruch 1,
**dadurch gekennzeichnet,**
**dass** das Anschlussprofil (10, 10a, 10b) wenigstens eine Stütznut (14) für die Abstützung auf einem Randsteg (9b) eines Karosserieausschnittes aufweist.

5. Rohbaukarosserie nach Anspruch 1,
**dadurch gekennzeichnet,**
**dass** das Anschlussprofil (10, 10a, 10b) eine Auflagefläche (15) für die Positionierung einer Innenverkleidung (11, 11a, 11b) aufweist.

6. Rohbaukarosserie nach Anspruch 1,
**dadurch gekennzeichnet,**
**dass** das Anschlussprofil (10, 10a, 10b) mit einem Toleranzausgleichsabschnitt (17) als Anschluss an die Innenverkleidung (11, 11a, 11b) versehen ist.

7. Rohbaukarosserie nach Anspruch 1,
**dadurch gekennzeichnet,**
**dass** das Anschlussprofil (10) mit wenigstens einem zu einer Verglasung (2a) gerichteten Stützabschnitt(18) mit Abstandshalterfunktion versehen ist.

8. Rohbaukarosserie nach Anspruch 1,
**dadurch gekennzeichnet, dass** das Anschlussprofil (10a) einen zu einer Verglasung (2b) gerichteten Dichtabschnitt (19) aufweist.

9. Rohbaukarosserie nach Anspruch 1,
**dadurch gekennzeichnet,**
**dass** das Anschlussprofil (10b) sich an einer Fensterführung (20) für eine Schiebefensteranordnung (2c) abstützt.

## Claims

1. Body-in-white structure for a motor vehicle with multi-shell body wall sections which, above a vehicle belt line at least in the region of one shell, are provided with at least one respective body aperture, **characterised in that**, provided in the region of the body aperture (4) is a peripheral receiving channel arrangement (8), one channel wall (9a) of which is formed by an inner shell (6), and the other channel wall (9b) of which is formed by an outer shell of each side wall section (1), and **in that** provided for a glazing (2, 2a, 2b, 2c) and/or an interior trim (11, 11 a, 11b) is a peripheral connection profile (10, 10a, 10b) which can be fixed by means of a plug-in section (13) in the receiving channel arrangement (8).

2. Body-in-white structure according to claim 1, **characterised in that** the two shells (5, 6) each have a body aperture forming a common window aperture (4), and **in that** the channel walls are formed by edge webs (9a, 9b) of the two body apertures which are parallel to one another and aligned in the direction of the window plane.

3. Body-in-white structure according to claim 1, **characterised in that** the two shells (5, 6) on the side of the receiving channel arrangement (8) remote from the body aperture lie flat against one another forming a peripheral connection flange (7) and are rigidly connected to one another, in particular welded or glued.

4. Body-in-white structure according to claim 1, **characterised in that** the connection profile (10, 10a, 10b) has at least one support groove (14) to support a body aperture on an edge web (9b).

5. Body-in-white structure according to claim 1, **characterised in that** the connection profile (10, 10a, 10b) has a support face (15) for positioning an interior trim (11, 11a, 11b).

6. Body-in-white structure according to claim 1, **characterised in that** the connection profile (10, 10a, 10b) is provided with a tolerance compensation section (17) as a connection to the interior trim (11, 11a, 11b).

7. Body-in-white structure according to claim 1, **characterised in that** the connection profile (10) is provided with at least one support section (18) with a spacer function directed towards a glazing (2a).

8. Body-in-white structure according to claim 1, **characterised in that** the connection profile (10a) has a sealing section (19) directed towards a glazing (2b).

9. Body-in-white structure according to claim 1, **characterised in that** the connection profile (10b) is supported on a window guide (20) for a sliding window arrangement (2c).

## Revendications

1. Structure brute de carrosserie pour véhicule avec des tronçons de paroi de carrosserie à plusieurs coques, qui sont munies au-dessus d'une ceinture du véhicule, au moins dans la zone d'une coque, chaque fois d'au moins une découpe de carrosserie, **caractérisée en ce que** dans la zone de découpe de carrosserie (4) il est prévu une configuration de canal de fixation circulaire (8), dont l'une des parois de canal (9a) est formée d'une coque intérieure (6) et dont l'autre paroi de canal (9b) est formée d'une coque extérieure de chaque tronçon de paroi latérale (1), et **en ce que** pour un vitrage (2, 2a, 2b, 2c) et/ou une garniture intérieure (11, 11a, 11b), il est prévu un profil de raccordement circulaire (10, 10a, 10b), qu'on peut fixer au moyen d'un tronçon enfichable (13) dans la configuration du canal de fixation (8).

2. Structure brute de carrosserie selon la revendication 1, **caractérisée en ce que** les deux coques (5, 6) présentent chacune une découpe de carrosserie avec formation d'une découpe de fenêtre commune (4), et **en ce que** les parois de canal sont formées par des méplats de bordure (9a, 9b) des deux découpes de carrosserie, qui sont orientés parallèlement entre eux et au plan de la fenêtre.

3. Structure brute de carrosserie selon la revendication 1, **caractérisée en ce que** les deux coques (5, 6), sur le côté de la configuration de canal de fixation (8) éloigné de la découpe de carrosserie, se trouvent à plat l'une à côté de l'autre, avec formation d'une bride de liaison circulaire (7), et sont fixées l'une à l'autre, notamment soudées ou collées.

4. Structure brute de carrosserie selon la revendication 1, **caractérisée en ce que** le profil de raccordement (10, 10a, 10b) présente au moins une rainure d'appui (14) pour l'appui sur un méplat de bordure (9b) d'une découpe de carrosserie.

5. Structure brute de carrosserie selon la revendication 1, **caractérisée en ce que** le profil de raccordement (10, 10a, 10b) présente une surface de support (15) pour le positionnement d'une garniture intérieure (11, 11a, 11b).

6. Structure brute de carrosserie selon la revendication 1, **caractérisée en ce que** le profil de raccordement (10, 10a, 10b) est muni d'un tronçon de rattrapage de la tolérance (17) comme raccordement à la garniture intérieure (11, 11a, 11b).

7. Structure brute de carrosserie selon la revendication 1, **caractérisée en ce que** le profil de raccordement (10) est muni d'au moins un tronçon d'appui (18) dirigé vers un vitrage (2a) avec une fonction de maintien à distance.

8. Structure brute de carrosserie selon la revendication 1, **caractérisée en ce que** le profil de raccordement (10a) présente un tronçon d'étanchéité (19) dirigé vers un vitrage (2b)

9. Structure brute de carrosserie selon la revendication 1, **caractérisée en ce que** le profil de raccordement (10b) s'appuie sur un guidage de fenêtre (20) pour une configuration de fenêtre glissante.
